# FASCICULE DE BREVET EUROPEEN

(11) **EP 3 949 287 B1**
(45) Date de publication et mention de la délivrance du brevet: **10.01.2024**
(21) Numéro de dépôt: 20731528.4
(22) Date de dépôt: 20.03.2020
(51) Int. Cl.: H04L 12/46, H04L 69/167

(54) **PASSERELLE ET PROCÉDÉ DE DIFFÉRENTIATION DE TRAFIC ÉMIS PAR LA PASSERELLE, DISPOSITIF ET PROCÉDÉ GESTION DU TRAFIC**
GATEWAY UND VERFAHREN ZUR UNTERSCHIEDLICHEN VERKEHR VON GATEWAY, GERÄT UND VERFAHREN ZUR VERWALTUNG DES VERKEHRS
GATEWAY AND METHOD FOR DIFFERENTIATING TRAFFIC EMITTED BY THE GATEWAY, DEVICE AND METHOD FOR MANAGING TRAFFIC

(30) Priorité: 28.03.2019 FR 1903264
(43) Date de publication de la demande: 09.02.2022
(73) Titulaire: Orange, 92130 Issy-les-Moulineaux (FR)
(72) Inventeur: BOUVET, Bertrand, 92326 CHÂTILLON CEDEX (FR)
(74) Mandataire: Cabinet Beau de Loménie
(86) Numéro de dépôt international: PCT/FR2020/050608
(87) Numéro de publication internationale: WO 2020/193924

(56) Documents cités:
- EP-A1- 1 420 559
- WO-A1-2010/072953
- FR-A1- 2 898 003

## Description

### Technique antérieure

L'invention se rapporte au domaine général des télécommunications. Elle concerne plus particulièrement le domaine de gestion de trafic émis par une passerelle entre deux réseaux.

Une passerelle entre un premier réseau et un deuxième réseau assure une fonction d'interface entre ces deux réseaux. En particulier, lorsque le premier réseau est un réseau local, et que le deuxième réseau est un réseau d'accès à un réseau d'un opérateur, la passerelle route des paquets émis par des terminaux du réseau local vers le réseau d'accès, et des paquets reçus du réseau d'accès et destinés à ces terminaux. Un exemple se trouve dans EP 1420559.

La passerelle dispose d'une première adresse IP qui l'identifie dans le premier réseau (le réseau local dans cet exemple) et d'au moins une deuxième adresse IP qui l'identifie dans le deuxième réseau (le réseau d'accès). En particulier, la passerelle peut avoir plusieurs deuxièmes adresses IP lorsqu'elle comporte plusieurs interfaces de connexion au deuxième réseau.

Dans le cas d'adressage de paquets de type IPv4, la passerelle met en oeuvre une méthode de traduction d'adresse NAPT (pour "Network Address Port Translation" en anglais).

Lorsque la passerelle reçoit d'un terminal du réseau local un paquet destiné à être routé vers le réseau d'accès, la passerelle crée une nouvelle entrée dans sa table NAPT (si cette entrée NAPT n'existe pas déjà) en sauvegardant l'adresse IP source du paquet (l'adresse du terminal dans le réseau local), le numéro de port source sélectionné par l'application du terminal ayant généré le paquet, l'adresse IP de destination du paquet, le numéro de port de destination, un identifiant du protocole de communication utilisé pour ce paquet tel que le protocole TCP ou le protocole UDP, et éventuellement un numéro de port source modifié par la passerelle. Cette entrée NAPT permet de mémoriser le fait que ce paquet a été généré par le terminal et de router un éventuel paquet de réponse à celui-ci vers le terminal. La passerelle modifie ensuite l'entête de ce paquet en remplaçant l'adresse IP source du terminal par sa propre adresse IP sur le réseau d'accès. Ayant modifié l'entête du paquet, la passerelle recalcule par sa fonction NAPT la somme de contrôle du paquet (appelée aussi « empreinte » ou « checksum » en anglais) avant d'envoyer le paquet à sa destination via le réseau d'accès.

Vu du destinataire, ce paquet provient de la passerelle car son adresse IP source est celle de la passerelle sur le réseau d'accès. Un paquet de réponse à ce paquet aura cette adresse IP de la passerelle sur le réseau d'accès comme adresse IP de destination.

A la réception du paquet de réponse, la passerelle consulte sa table NAPT, détermine que ce paquet de réponse est destiné au terminal du réseau local, et modifie son entête en remplaçant l'adresse IP de destination par l'adresse IP du terminal dans le réseau local, et potentiellement le numéro de port destination dans le cas où la passerelle aurait modifié le numéro de port source lors de l'envoi du paquet vers le réseau d'accès. De même, la passerelle, et plus précisément sa fonction NAPT, recalcule la somme de contrôle (checksum) du paquet de réponse avant de le transmettre au terminal.

Dans le cas d'adressage de paquets de type IPv6, l'adresse IP de la passerelle sur le réseau d'accès et l'adresse IP du terminal ont un même préfixe IPv6 car elles correspondent au même réseau. Notamment, le préfixe IPv6 du terminal peut être attribué au terminal par la passerelle, le complément de l'adresse IPv6 du terminal étant auto-généré par la concaténation de l'identifiant de l'interface réseau du terminal.

Lorsque la passerelle reçoit du terminal un paquet IPv6 à transmettre à un destinataire via le réseau d'accès, la passerelle vérifie si ce réseau d'accès supporte le protocole IPv6. Si c'est le cas, la passerelle décrémente la valeur du champ « Hop Limit » dans l'entête du paquet et le transfert vers le réseau d'accès.

Si ce n'est pas le cas, et à condition que la passerelle supporte les deux protocoles IPv4 et IPv6 (fonctionnement en mode Dualstack), la passerelle crée un tunnel IPv4 entre elle et un équipement réseau de type CGN (pour « Carrier Grade NAT » en anglais) pour encapsuler des paquets IPV6 transmis ou reçus par le terminal dans des paquets IPV4. Dans ce cas, l'équipement réseau de type CGN utilise une table NAPT telle que décrit précédemment.

La Demanderesse a détecté que des terminaux du réseau local connectés à la passerelle peuvent avoir des comportements frauduleux.

A titre d'exemple, un utilisateur frauduleux peut générer par son terminal connecté à la passerelle des appels de voix sur IP, VolP (pour « Voice over IP » en anglais), sans passer par la pile protocolaire VolP de la passerelle.

En particulier, l'utilisateur frauduleux peut utiliser un automate d'appels pour générer plusieurs appels VolP simultanément.

Un autre exemple de fraude consiste en ce qu'un terminal du réseau local se connecte, via la passerelle, à un serveur accessible à travers le réseau d'accès et pirate des informations sensibles envoyées par ce serveur à la passerelle, telles que des paquets de signalisation, des caractéristiques d'un logiciel de type firmware, un fichier de configuration VolP, un portail web de configuration de services, etc. Il serait donc utile de détecter le trafic émis par le terminal avant même d'atteindre le serveur.

Un autre exemple de fraude peut se présenter lorsque la passerelle est un terminal qui dispose d'une fonction de type Tethering, lui permettant de fonctionner comme un point d'accès WiFi. Une tel point d'accès permet de bénéficier d'une connexion à un réseau d'accès, cellulaire par exemple, des terminaux qui lui sont connectés via le réseau WiFi et authentifiés auprès de lui. Un terminal d'un utilisateur frauduleux peut se connecter à un tel point d'accès WiFi en fraudant l'étape d'authentification et se connecter au réseau d'accès sous l'identité (et notamment le forfait de consommation) du point d'accès WiFi.

Il existe donc un besoin en une solution permettant de détecter le comportement frauduleux de terminaux connectés à la passerelle.

### Exposé de l'invention

L'invention vise un procédé de différentiation de trafic, mis en oeuvre par une passerelle entre un premier réseau et un deuxième réseau Le procédé comprend des étapes de:
-- insertion d'une information de marquage dans un champ de l'entête d'un paquet émis par la passerelle et destiné à être routé vers le deuxième réseau pour différencier si :
   - le paquet a été généré par la passerelle, ou si
   - le paquet a été généré par un terminal du premier réseau connecté à la passerelle ; et
-- envoi du paquet vers le deuxième réseau.

Corrélativement, l'invention vise une passerelle entre un premier réseau et un deuxième réseau, comprenant :
-- un module de différentiation de trafic configuré pour insérer une information de marquage dans un champ de l'entête d'un paquet émis par ladite passerelle et destiné à être routé vers le deuxième réseau pour différencier si :
   - le paquet a été généré par la passerelle, ou si
   - le paquet a été généré par un terminal du premier réseau connecté à la passerelle ; et
-- des moyens de communication configurés pour envoyer le paquet vers le deuxième réseau.

Les caractéristiques et avantages du procédé de différentiation selon l'invention présentés ci-après s'appliquent de la même façon à la passerelle selon l'invention et vice versa.

Corrélativement, l'invention vise un procédé de gestion d'un trafic reçu par un dispositif d'un réseau comportant un dit deuxième réseau, le trafic étant reçu en provenance d'une passerelle entre un premier réseau et ledit deuxième réseau, le dispositif étant connecté à la passerelle via le deuxième réseau, ce procédé comprenant des étapes de :
-- réception d'un paquet en provenance de la passerelle ;
-- recherche d'une information de marquage dans un champ de l'entête du paquet, cette information de marquage permettant de différencier si :
   - le paquet a été généré par la passerelle, ou si
   - le paquet a été généré par un terminal du premier réseau connecté à la passerelle ; et
-- traitement du paquet en fonction du résultat de la recherche.

Corrélativement, l'invention vise un dispositif d'un réseau comportant un dit deuxième réseau, ledit dispositif étant connecté, via le deuxième réseau, à une passerelle entre un premier réseau et le deuxième réseau, et permettant de gérer un trafic reçu en provenance de la passerelle, le dispositif comprenant :
-- des moyens de communication configurés pour recevoir un paquet en provenance de la passerelle ;
-- des moyens de recherche configurés pour rechercher au moins une information de marquage dans un champ de l'entête du paquet, l'information de marquage permettant de différencier si :
   - le paquet a été généré par la passerelle, ou si
   - le paquet a été généré par un terminal du premier réseau connecté à la passerelle ; et
-- un module de traitement configuré pour traiter le paquet en fonction du résultat de la recherche.

Les caractéristiques et avantages du procédé de gestion selon l'invention présentés ci-après s'appliquent de la même façon au dispositif réseau selon l'invention et vice versa.

Les caractéristiques et avantages du procédé de différentiation selon l'invention présentés ci-après s'appliquent de la même façon au procédé de gestion selon l'invention et vice versa.

La passerelle conforme à l'invention peut mettre en oeuvre le procédé de différentiation conforme à l'invention. Le dispositif conforme à l'invention peut mettre en oeuvre le procédé de gestion conforme à l'invention.

Conformément à l'invention, le terminal du premier réseau connecté à la passerelle peut être un téléphone mobile de type smartphone, un ordinateur, une tablette, un objet connecté, ou tout autre dispositif communicant connecté au premier réseau.

Dans un mode de réalisation, le premier réseau est un réseau local et le deuxième réseau est un réseau d'accès.

Au sens de l'invention, le réseau local peut être un réseau domestique, un réseau universitaire, un réseau d'entreprise ou tout autre réseau de type LAN (pour "Local Access Network" en anglais) géré par une entité administrative.

Au sens de l'invention, le réseau d'accès est un réseau permettant d'accéder à un réseau étendu de type WAN (pour « Wide Area Network ») ou à un réseau coeur de type CAN (pour « Centralized Area Network ») ou à un réseau d'agrégation de type MAN (pour "Metropolitan Area Netwrok"). Le réseau d'accès est géré par un opérateur.

Aucune limitation n'est imposée aux technologies de communication déployées par le réseau local ou par le réseau d'accès.

A titre indicatif, le réseau local peut être un réseau filaire, Ethernet, ou en fibre optique par exemple, ou un réseau de communication sans fil, tel qu'un réseau Bluetooth, ou un réseau WiFi.

A titre indicatif, le réseau d'accès peut être un réseau filaire, ADSL ou en fibre optique par exemple, un réseau de communication sans fil, tel qu'un réseau WiFi ou un réseau cellulaire de type 3G, 4G ou 5G.

Dans un autre mode de réalisation, le premier réseau est un réseau d'accès et le deuxième réseau est un réseau d'agrégation MAN ou un réseau coeur CAN.

Le premier réseau et le deuxième réseau peuvent être d'une même technologie ou de technologies différentes.

La passerelle joue un rôle d'interface entre le premier réseau et le deuxième réseau, elle est à la fois un dispositif du premier réseau et du deuxième réseau. La passerelle permet de router des paquets de chacun des réseaux vers l'autre. Elle permet ainsi de connecter des terminaux du premier réseau au deuxième réseau.

Conformément à l'invention, la passerelle permet de router des paquets des terminaux du premier réseau (local par exemple) vers le deuxième réseau (d'accès par exemple). La passerelle peut également générer elle-même des paquets et les envoyer vers le deuxième réseau (d'accès), tels que des paquets de signalisation ou des paquets de contrôle de la connexion des premier et deuxième réseaux.

L'information du marquage permet, à un dispositif récepteur du paquet marqué de distinguer si ce paquet a été généré par la passerelle ou a été généré par un terminal du premier réseau, le dispositif récepteur étant un dispositif conforme à l'invention. L'invention permet donc de traiter le paquet en fonction de son générateur.

D'une façon générale, l'invention permet de distinguer le trafic au niveau du deuxième réseau.

L'invention s'applique en particulier en cas d'adressage en IPv4. En effet, en IPv4, les paquets émis par la passerelle ont comme adresse IP source l'adresse IP de la passerelle sur le deuxième réseau. L'information de marquage permet à un dispositif récepteur de ces paquets de savoir si ces paquets ont été générés par la passerelle elle-même ou générés par des terminaux du premier réseau et transférés par la passerelle.

L'invention a également une application avantageuse en cas d'adressage en IPV6. En effet, en IPv6, un paquet émis par un terminal du premier réseau a comme adresse IP source l'adresse du terminal et non pas l'adresse de la passerelle. Cependant, ces deux adresses, du terminal et de la passerelle, présentent le même préfixe IPv6 et le contrôle de sécurité par un destinataire de ce paquet se fait actuellement sur la base du préfixe ou d'une adresse de réseau ou d'un sous-réseau car il est difficile de contrôler l'identité de l'équipement ayant généré le paquet en analysant des informations d'interfaces réseau concaténées au préfixe IPv6.

L'invention présente une solution plus fiable qu'une distinction d'un générateur d'un paquet en se basant sur le port source de ce paquet. En effet, ce port peut être modifié par la passerelle, et même s'il n'est pas modifié, ce port peut être identique pour la passerelle et pour le terminal, car il est relatif à une application : par exemple le port UDP/TCP 5060 correspond à des applications de voix sur IP (VoIP) en protocole SIP (pour « Session Initiation Protocol » en anglais).

L'invention présente une solution plus fiable qu'une distinction d'un générateur d'un paquet en se basant sur une vérification de champs d'entêtes comprises dans le paquet et correspondant à une couche applicative (du modèle OSI par exemple). A titre d'exemple, pour le protocole SIP, on cite le champ « User Agent » de l'entête SIP. Ce champ représente un fournisseur et/ou la version logicielle de l'application qui a généré le paquet. Cependant ce champ peut être modifié dans la pile SIP d'un terminal VolP d'un utilisateur mal intentionné, par exemple en insérant la même valeur que celle insérée par la pile SIP de la passerelle.

L'invention présente une solution plus fiable qu'un contrôle des entêtes SIP valorisées avec l'adresse IP source et le numéro de port utilisés par l'application VoIP du terminal du premier réseau, tels que le champ SIP « Adresse de Contact » (AoC) ou le champ SIP « Via ». En effet, une passerelle implémentant une fonction ALG (Application Layer Gateway) ne transfert pas ces informations à l'extérieur du premier réseau. Une telle passerelle remplace systématiquement au niveau applicatif SIP, par exemple pour les champs « Adresse de Contact » et « Via », l'adresse IP valorisée avec l'adresse IP du terminal par sa propre deuxième adresse IP.

En outre, l'invention présente une solution moins coûteuse en terme de mémoire et de capacité de calcul par rapport à une distinction d'un générateur d'un paquet sur la base du champ « User agent SIP » ou d'une entête SIP « AoC » ou « Via » car ces méthodes nécessiteraient la mise en place de règles de manipulation d'entêtes, de type HMR (pour « Header Manipulation Rules » en anglais).

L'invention permet donc d'améliorer la sécurité au niveau du réseau comportant le deuxième réseau. Différentes méthodes de traitement du paquet peuvent être appliquées au paquet en fonction du fait qu'il a été généré par la passerelle ou par le terminal du premier réseau.

L'invention permet de détecter des éventuelles utilisations frauduleuses. Par exemple un paquet de service VolP, que le dispositif conforme à l'invention a déterminé comme ayant été généré par le terminal, et qui comporte des identifiants de la passerelle au niveau de son entête SIP peut être interprété comme un paquet généré de façon frauduleuse.

Dans la description, lorsqu'on dit que la passerelle « génère » un paquet, on entend qu'elle le génère elle-même. Autrement dit, elle le construit et non qu'elle modifie un paquet reçu d'un tiers.

Dans un mode de réalisation de l'invention, l'information de marquage insérée par la passerelle est une indication que le paquet marqué a été généré par la passerelle. Dans ce mode, la passerelle n'insère pas d'information de marquage dans les entêtes des paquets générés par des terminaux du premier réseau et destinés à être routés par la passerelle vers le deuxième réseau.

Dans un autre mode, la passerelle n'insère une information de marquage dans l'entête d'un paquet, que lorsque ce paquet a été généré par un terminal du premier réseau.

Dans un autre mode, la passerelle insère une première information de marquage dans un champ des entêtes des paquets qu'elle génère, et une deuxième information dans un champ des entêtes des paquets qu'elle a reçu des terminaux du premier réseau et qu'elle transfert vers le deuxième réseau. Ainsi, à la réception d'un paquet, le dispositif conforme à l'invention peut distinguer si ce paquet a été généré par la passerelle ou par un terminal connecté à la passerelle selon qu'il comporte dans son entête la première ou la deuxième information de marquage.

De façon générale, la passerelle peut être considérée comme un dispositif de confiance, car elle fait partie du deuxième réseau. Des caractéristiques identifiant la passerelle, comme son adresse IP, sa localisation, ou un abonnement de connexion de la passerelle au deuxième réseau, peuvent être plus facilement contrôlées par le réseau comportant le deuxième réseau, que des caractéristiques de terminaux du premier réseau. Sous cette considération, les paquets générés par la passerelle sont considérés comme étant plus surs que les autres paquets générés par le terminal.

Dans un mode de réalisation, la passerelle conforme à l'invention est un équipement de terminaison de réseau ; un tel équipement est souvent commercialisé en France sous le nom de « box » et offre de multiples services (téléphonie, Internet, télévision...), tel qu'un équipement LiveBox (produit commercialisé d'Orange). Dans ce mode, le premier réseau est un réseau local, et le deuxième réseau est un réseau d'accès.

Dans ce mode de réalisation, il est préférable que la passerelle n'insère une information de marquage que dans les paquets qu'elle génère. En effet, le nombre de paquets générés par un équipement de terminaison de réseau est généralement inférieur au nombre de paquets transférés par cet équipement et ayant été générés par des terminaux du réseau local.

Toutefois, il est à noter que l'insertion de l'information de marquage conformément à l'invention n'est pas pénalisante en terme de temps de préparation du paquet pour son envoi vers le réseau d'accès.

En effet, si le paquet est généré par la passerelle, cette dernière peut insérer l'information de marquage lors de l'insertion des autres champs de l'entête.

Au contraire, si le paquet est généré par un terminal du réseau local, la passerelle modifie de toute façon l'entête de ce paquet :
-- une entête IPv4 est manipulée pour des fonctionnalités de type NAT (pour « Network Address Translation »), un remplacement d'une adresse IP, ou un port ou un re-calcul d'une information de type checksum ;
- une entête IPv6 est manipulée pour modifier le champ « Hop Limit ».

Dans un autre mode, la passerelle conforme à l'invention est un terminal pouvant fournir un service de partage de connexion de type Tethering. Dans ce mode, le premier réseau est un réseau local, et le deuxième réseau est un réseau d'accès. On rappelle qu'un terminal offrant un service Tethering permet de faire bénéficier de sa connexion à un réseau d'accès à un autre terminal connecté au premier terminal via un réseau local, le réseau local étant généralement un réseau WiFi.

Dans ce mode de réalisation, il est préférable que la passerelle n'insère une information de marquage que dans les paquets générés par des terminaux du réseau local et qui lui sont connectés et bénéficient de son service Tethering. En effet, une passerelle de ce type, étant elle-même un terminal de communication, peut générer autant voir plus de paquets que les autres terminaux du réseau local.

Alternativement, une passerelle de ce type peut insérer dans un champ de l'entête d'un paquet, une première ou une deuxième information de marquage pour différencier qui a généré le paquet : la passerelle ou un terminal qui lui est connecté.

Dans un mode de réalisation, la passerelle conforme à l'invention est une station de base d'un réseau cellulaire, telle qu'une station de base de type eNodeB ou eNodeB évoluée. L'application de l'invention au niveau d'une telle passerelle permet d'optimiser l'utilisation des ressources radio du réseau cellulaire en fonction de l'entité ayant généré le paquet. Les ressources radio étant limitées, une bonne qualité de service doit être privilégiée pour les paquets générés par la station de base (des paquets de signalisation) par rapport à des paquets générés par des terminaux connectés à la station de base. Dans ce mode de réalisation, le premier réseau est un réseau d'accès, et le deuxième réseau est un réseau d'agrégation ou un réseau coeur.

Dans un mode de réalisation, le dispositif conforme à l'invention et permettant de gérer le trafic, est compris dans l'un des dispositifs suivants:
-- le dispositif destinataire du paquet, ce dispositif peut être un téléphone, un ordinateur, une tablette, une montre connectée, un véhicule connecté, ou tout autre terminal de communication ;
-- un équipement de terminaison de réseau, par exemple appartenant à un même réseau local que le dispositif de destination du paquet ;
-- un point d'accès d'un réseau d'accès cellulaire, par exemple un point d'accès connecté au même réseau d'accès que la passerelle conforme à l'invention, ou un point d'accès connecté à un même réseau local que le dispositif de destination du paquet ;
-- un routeur ;
-- un commutateur, en effet certains commutateurs de niveau 2 du modèle OSI ont des capacités pour traiter des informations de niveau 3 ;
-- un équipement de gestion de la charge de trafic, connu en anglais sous le nom de "trafic loader" ou "trafic load manager";
-- un serveur de type Firewall ;
-- un dispositif du réseau comportant le deuxième réseau, auquel le dispositif et la passerelle conformes à l'invention sont connectés, tel qu'un dispositif de type A-SBC ("Access Session Border Controler"), P-CSCF ("Proxy Call Session Control Function"), MME ("Mobility Management Entity"), PGW ("Packet data network Gateway"), ou SGW ("Serving GateWay") ; ou
-- une plateforme de fourniture d'un service (P_SRV).

Il est à noter que la recherche et l'obtention de l'information de marquage par le dispositif conforme à l'invention ne pénalise pas la latence d'acheminement du paquet car de toute façon, les entêtes IP sont manipulées, par exemple pour rechercher une adresse IP source ou de destination, ou un numéro de port source ou de destination, ou pour un contrôle de cohérence de checksum du paquet,...

Il est à noter également que l'impact de l'invention sur les critères MTU (pour « Maximum Transmission Unit ») n'est pas pénalisant. Nous rappelons que les critères MTU sont relatifs à la taille maximale d'un paquet pouvant être transmis en une seule fois sur un segment de réseau. En effet, l'information de marquage peut consommer un seul bit pour distinguer les paquets générés par la passerelle des paquets générés par des terminaux du premier réseau.

Dans le cas où le paquet est de type IPv4, la passerelle peut insérer l'information de marquage dans le champ « Drapeaux » ou le champ « options IP » de l'entête IPv4 du paquet.

Nous rappelons que le champ « Drapeaux » est codé sur trois bits et n'utilise dans l'état de la technique que le deuxième et le troisième bit. De ce fait, le premier bit de ce champ « Drapeaux » peut être utilisé par la présente invention. A titre d'exemple, ce premier bit peut être fixé à 1 pour les paquets générés par la passerelle et fixé à 0 pour les paquets générés par des terminaux du premier réseau connectés à la passerelle. La taille du paquet IP n'est pas augmentée.

Nous rappelons qu'une option IP est codée sur 8 bits. Il est envisageable de créer une nouvelle option IP, de l'une des classes 0 à 3, pour y insérer l'information de marquage. L'utilisation du champ « Options IP » consomme plus de mémoire que l'utilisation du champ « Drapeaux ». En effet, l'utilisation du champ « options IP » augmente la taille du paquet au maximum de 4 octets, même si une option IP est codée sur un seul octet de sorte à préserver l'alignement des paquets IP sur un multiple de 32 bits.

L'utilisation du champ « Drapeaux » est donc préférable en terme de taille du paquet et de recherche d'une information de marquage dans le paquet.

Dans le cas où le paquet est de type IPv6, la passerelle peut insérer l'information de marquage dans le champ « étiquette de flow » ou « entête d'extension» de l'entête IPv6 du paquet.

Ainsi, l'invention est compatible avec les protocoles IPv4 et IPv6, et peut donc être facilement mise en oeuvre par des passerelles et des dispositifs réseau actuellement disponibles sur le marché avec des modifications mineures pour insérer et rechercher les informations de marquage.

L'invention peut être utilisée pour marquer des trafics de différentes applications, comme les applications de navigation web, les applications de mail, les applications de transfert de fichiers FTP (pour «File Transport Protocol »), les applications de TV, les applications de vidéo VoD (pour « Video on Demand »), les applications de voix sur IP VolP (pour « Voice over IP »), des trafics de signalisation générés par des véhicules connectés et/ou autonomes etc. En effet, les informations de marquage sont insérées au niveau des entêtes IP et n'impactent pas les données de ces applications intégrées dans les corps des paquets.

L'invention est compatible avec le protocole d'agrégation de trafic MPTCP (pour « Multi Path Transport Control Protocol » en anglais).

L'invention peut être compatible avec les mécanismes combinatoires de tunnel, permettant de passer d'un protocole parmi les protocoles IPv4, IPv6 et GTP (pour « GPRS Tunneling Protocol » en anglais) à un autre.

L'invention est aussi compatible avec les mécanismes de sécurisation de l'état de la technique, tels que les protocoles IPSec (pour « Internet Protocol Security), sRTP (pour « Secured Real Time Protocol »), SIPS (pour « Session Initiation Protocol Secured »), HTTPS (pour « Hyper Text Transfer Protocol Secured »), et TLS (pour « Transport Layer Security »).

Dans un mode de réalisation, l'étape de traitement du paquet du procédé de gestion conforme à l'invention, comporte une incrémentation d'un compteur de paquets comportant une information de marquage.

L'invention permet d'effectuer des statistiques sur le nombre ou le pourcentage des paquets générés par la passerelle ou par les terminaux connectés à la passerelle. Ces statistiques peuvent être exploitées pour dimensionner le réseau d'accès, pour anticiper des évolutions d'un réseau, pour proposer des nouvelles fonctionnalités de connexion à un réseau, pour adapter la qualité de service offerte par un réseau, et/ou pour établir des politiques de facturation.

Dans un mode de réalisation, le traitement du paquet par le dispositif conforme à l'invention comporte une suppression de l'information de marquage avant un transfert de ce paquet vers un autre dispositif.

Ce mode est adapté pour un traitement local des paquets, au niveau du dispositif conforme à l'invention, sans divulguer les informations de marquage aux autres dispositifs par lesquels le paquet passe jusqu'à arriver à son dispositif destinataire.

Dans un mode de réalisation, le traitement du paquet par le dispositif conforme à l'invention comporte une modification de l'information de marquage avant un transfert de ce paquet vers un autre dispositif.

Ce mode peut être mis en oeuvre pour assurer une compatibilité lors d'un passage du paquet d'un réseau à un autre, ces deux réseaux n'utilisant pas un même format des informations de marquage.

Dans un mode de réalisation, le traitement du paquet par le dispositif conforme à l'invention comporte une sélection d'une qualité de service à appliquer au paquet.

Par exemple, le dispositif conforme à l'invention peut traiter les paquets générés par la passerelle de façon privilégiée par rapport aux paquets générés par un terminal du premier réseau : en les plaçant dans des files d'attentes prioritaires ou plus courtes, ou en les transportant sur un canal de communication avec des meilleures performances (en termes de latence ou de rapport signal à bruit par exemple), ou les routant vers des routes plus rapides, etc. En effet, les paquets générés par la passerelle peuvent comporter des paquets de signalisation.

Dans un mode de réalisation, l'étape de traitement comporte un marquage de type IP DSCP (pour « Differentiated Service Code Point » en anglais). Ce mode permet de notifier des noeuds placés en aval du dispositif de gestion, d'un niveau de priorité associé au paquet et/ou d'un autre traitement devant être appliqué au paquet.

Dans un mode de réalisation, l'étape de traitement comporte une application d'une méthode de facturation en fonction de marquage.

Dans un mode de réalisation, le traitement du paquet par le dispositif conforme à l'invention comporte une application au paquet d'une méthode de routage.

La méthode de routage peut comporter un routage des paquets vers différents chemins en fonction de leurs informations de marquage, par exemple vers différentes interfaces de connexion du dispositif conforme à l'invention.

Dans un mode de réalisation, le traitement du paquet par le dispositif conforme à l'invention comporte une destruction du paquet.

Ce mode permet d'arrêter le transfert du paquet s'il a été déterminé que ce paquet est susceptible d'être généré par un utilisateur frauduleux.

Dans un mode de réalisation, le traitement du paquet par le dispositif conforme à l'invention comporte un envoi d'un paquet ICMP (pour « Internet Control and Error Message Protocol » en anglais) à l'expéditeur du premier paquet pour l'informer d'une raison de refus d'acheminement de ce premier paquet.

Dans un mode de réalisation, le traitement du paquet par le dispositif conforme à l'invention comporte une création d'un tunnel IP pour router le paquet via ce tunnel IP.

Ce mode permet d'aiguiller le paquet vers une destination spécifique, à savoir l'autre bout du tunnel IP, et d'appliquer au paquet une méthode déterminée de qualité de service correspondante à ce tunnel IP.

Dans un mode de réalisation, le traitement du paquet par le dispositif conforme à l'invention comporte une désencapsulation d'un tunnel IP via lequel ledit paquet est routé.

Ce mode permet d'appliquer au paquet une méthode de routage et une méthode d'application d'une qualité de service, autres que les méthodes mises en oeuvre pour le tunnel IP.

Dans un mode de réalisation, le traitement du paquet par le dispositif conforme à l'invention comporte une mémorisation de paramètres de la session durant laquelle le paquet est reçu, pour appliquer un traitement à d'autres paquets de la même session.

Nous rappelons qu'une session IP est basée sur une adresse IP source, un port d'émission, une adresse IP destination, un port de destination et un protocole de transport.

En particulier, la mémorisation de paramètres de session permet d'identifier au moins un paquet de réponse au paquet reçu par le dispositif conforme à l'invention. Ce mode permet d'appliquer un traitement spécifique aux paquets de réponse à des paquets marqués. En particulier, le traitement appliqué aux paquets de réponse peut être identique au traitement des paquets reçus en provenance de la passerelle.

Aussi, la mémorisation de paramètres de session permet d'identifier d'autres paquets reçus en provenance de la passerelle, de la même session que le paquet traité. En effet, une fois que la session IP est établie, lorsque le dispositif conforme à l'invention détecte une information de marquage sur un premier paquet de la session, il peut déduire que les paquets de la même session sont aussi générés par la même entité (la passerelle ou un même terminal du premier réseau). La passerelle peut alors se contenter de marquer un seul ou certains paquets de cette session IP, et non pas la totalité des paquets de la même session. Le dispositif conforme à l'invention peut appliquer un traitement spécifique à ces paquets de la même session, en particulier un traitement identique au premier paquet traité de cette session.

L'invention vise à un système de gestion d'un trafic émis par une passerelle conforme à l'invention vers le réseau d'accès. Ce système comporte la passerelle et au moins un dispositif conforme à l'invention permettant de gérer le trafic.

L'invention vise également un premier programme d'ordinateur sur un support d'enregistrement, ce programme étant susceptible d'être mis en oeuvre dans un ordinateur ou une passerelle conforme à l'invention. Ce programme comporte des instructions adaptées à la mise en oeuvre d'un procédé de différentiation de trafic tel que décrit ci-dessus.

L'invention vise également un deuxième programme d'ordinateur sur un support d'enregistrement, ce programme étant susceptible d'être mis en oeuvre dans un ordinateur ou un dispositif de gestion de trafic conforme à l'invention. Ce programme comporte des instructions adaptées à la mise en oeuvre d'un procédé de gestion de trafic tel que décrit ci-dessus.

Chacun de ces programmes peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'information ou un support d'enregistrement lisibles par un ordinateur, et comportant des instructions du premier ou du deuxième programme d'ordinateur tel que mentionné ci-dessus.

Les supports d'information ou d'enregistrement peuvent être n'importe quelle entité ou dispositif capable de stocker les programmes. Par exemple, les supports peuvent comporter un moyen de stockage, tel qu'une ROM, par exemple un CD ROM ou une ROM de circuit microélectronique, ou encore un moyen d'enregistrement magnétique, par exemple une disquette (floppy dise) ou un disque dur, ou une mémoire flash.

D'autre part, les supports d'information ou d'enregistrement peuvent être des supports transmissibles tels qu'un signal électrique ou optique, qui peut être acheminé via un câble électrique ou optique, par lien radio, par lien optique sans fil ou par d'autres moyens.

Les programmes selon l'invention peuvent être en particulier téléchargés sur un réseau de type Internet.

Alternativement, chaque support d'informations ou d'enregistrement peut être un circuit intégré dans lequel un programme est incorporé, le circuit étant adapté pour exécuter ou pour être utilisé dans l'exécution d'un procédé conforme à l'invention.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
[Fig. 1] la figure 1 illustre une architecture de réseaux dans lesquels des procédés de l'invention peuvent être mis en oeuvre selon un premier mode de réalisation de l'invention ;
[Fig. 2] la figure 2 est un organigramme représentant des étapes d'un procédé de différentiation et des étapes d'un procédé de gestion, les procédés étant conformes à l'invention et mis en oeuvre selon le premier mode de réalisation ;
[Fig. 3] la figure 3 illustre une architecture de réseaux dans lesquels des procédés de l'invention peuvent être mis en oeuvre selon un deuxième mode de réalisation de l'invention ;
[Fig. 4] la figure 4 présente des architectures fonctionnelles d'un système de gestion, d'une passerelle et d'un dispositif de gestion de trafic, conformes à l'invention;
[Fig. 5] la figure 5 présente une architecture matérielle d'une passerelle selon un mode de réalisation de l'invention ; et
[Fig. 6] la figure 6 présente une architecture matérielle d'un dispositif de gestion selon un mode de réalisation de l'invention.

### Description de modes de réalisation

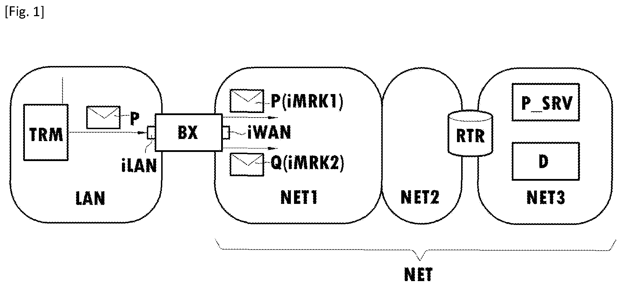

La **figure 1** illustre une architecture d'un réseau local LAN connecté via une passerelle BX à un réseau NET d'un opérateur. Un procédé de différentiation de trafic est mis en oeuvre par la passerelle BX, un procédé de gestion de trafic est mis en oeuvre dans le réseau NET, par un dispositif D de ce réseau NET. La passerelle BX, le dispositif D et les procédés de différentiation et de gestion sont conformes à un premier mode de réalisation de l'invention.

Dans ce mode de réalisation, le réseau NET comporte un réseau d'accès NET1, un réseau métropolitain NET2, de type MAN, et un réseau coeur NET3, de type CAN. Ces trois réseaux NET1, NET2 et NET3 sont gérés par une même entité administrative, qui est dans cet exemple un opérateur de communication. Dans ce mode, le réseau d'accès NET1 est un réseau en fibre optique, cependant, aucune limitation n'est imposée aux technologies déployées dans les réseaux NET1, NET2 et NET3.

Dans ce mode de réalisation, le réseau local LAN constitue un premier réseau au sens de l'invention. Le réseau d'accès NET1 constitue un deuxième réseau au sens de l'invention.

Dans ce mode de réalisation, la passerelle BX est un équipement de terminaison de réseau permettant de connecter le réseau local LAN au réseau d'accès NET1.

Dans ce mode, le réseau local LAN est un réseau WiFi. Alternativement, il peut être un réseau Ethernet en fibre, en câble coaxial, Bluetooth, DECT (pour «Digital Enhanced Cordless Télécommunications » en anglais) ou toute autre technologie de communication dans un réseau de type LAN.

Un terminal TRM est connecté à la passerelle BX via le réseau local LAN. Dans le mode décrit ici, ce terminal TRM est un ordinateur. Alternativement, le terminal TRM peut être un téléphone, une tablette, une montre connectée ou tout autre objet connecté au réseau local LAN.

La passerelle BX comporte une interface iLAN lui permettant de se connecter au réseau local LAN. La passerelle BX comporte aussi une interface iWAN lui permettant de se connecter au réseau NET, et plus précisément au réseau d'accès NET1.

La passerelle BX a deux adresses IP : une première adresse IP attribuée à son interface iLAN pour communiquer avec des équipements du réseau local LAN, et une deuxième adresse IP attribuée à son interface iWAN pour communiquer avec des équipements du réseau NET.

Dans le mode décrit ici, le dispositif D du réseau NET est un équipement de gestion de paquets VolP, cet équipement est de type A-SBC/ P-CSCF. Cet équipement D ne peut contrôler que des plages d'adresses IP source configurées par et appartenant à l'opérateur du réseau NET.

Conformément à l'invention, Il est souhaitable pour le dispositif D de détecter, lorsqu'il reçoit un paquet en provenance de la passerelle BX, si ce paquet a été généré par la passerelle BX, ou si ce paquet a été généré par le terminal TRM et transféré par la passerelle BX.

Le réseau NET comporte un routeur RTR appartenant aux réseaux NET2 et NET3 et permettant leur connexion. Le réseau NET, et en particulier le réseau coeur NET3 comporte une plateforme de services, P_SRV. Le routeur RTR et la plateforme P_SRV peuvent aussi constituer des dispositifs conformes à l'invention, mettant en oeuvre le procédé de gestion de trafic, conforme à l'invention.

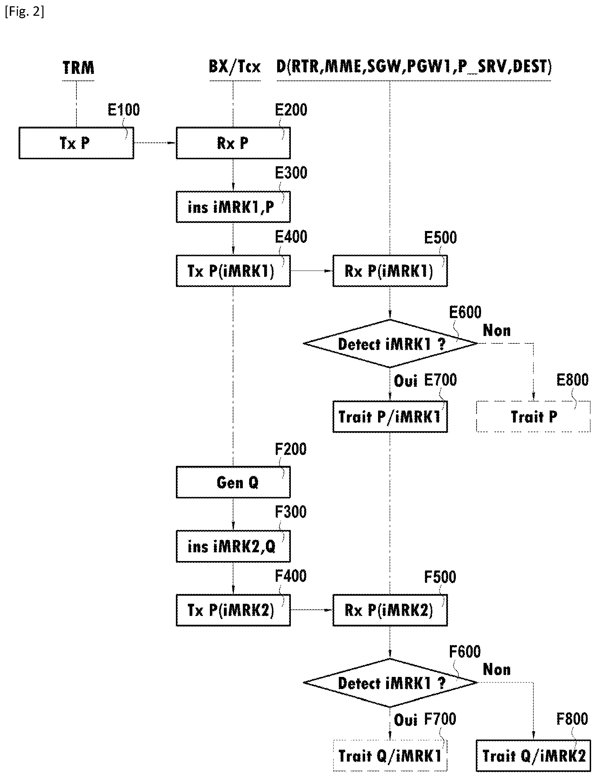

La **figure 2** est un organigramme représentant des étapes d'un procédé de différentiation de trafic, conforme à l'invention, mis en oeuvre par la passerelle BX décrite en référence à la figure 1. L'organigramme de la figure 2 représente aussi des étapes d'un procédé de gestion de trafic, conforme à l'invention, mis en oeuvre par le dispositif D décrit en référence à la figure 1.

Les étapes E200, E300, E400, F200, F300 et F400 décrites ci-après sont des étapes du procédé de différentiation de trafic conforme à l'invention.

Les étapes E500, E600, E700, E800, F500, F600, F700 et F800 décrites ci-après sont des étapes du procédé de gestion de trafic conforme à l'invention.

Au cours d'une étape E100, le terminal TRM envoie à la passerelle BX un paquet P à destination d'un dispositif accessible via le réseau d'accès NET1. Le dispositif destinataire du paquet peut être un dispositif du réseau NET ou un dispositif joignable à travers le réseau NET.

Nous supposons que le terminal TRM exécute un automate de génération d'appels en voix sur IP, VolP, de façon frauduleuse. Autrement dit, le terminal TRM génère des paquets IP d'appels VoIP à destination du réseau NET en préparant lui-même les entêtes SIP de ces paquets et en introduisant dans le champ « user agent » de ces entêtes, la valeur que la pile SIP de la passerelle BX insère pour les paquets VoIP qu'elle génère elle-même.

Au cours d'une étape E200, la passerelle BX reçoit le paquet P.

Au cours d'une étape E300, la passerelle BX insère dans un champ de l'entête IP du paquet P, une information de marquage iMRK1 indiquant que ce paquet P a été généré par un terminal du réseau local LAN.

Si le paquet P est conforme à la norme IPv4, le champ dans lequel l'information de marquage iMRK1 est insérée peut être le champ « Drapeaux ». l'information de marquage iMRK1 peut consister en un bit « 1 » inséré dans le premier bit du champ « Drapeaux ».

Alternativement, la passerelle BX peut insérer l'information de marquage iMKR1 dans le champ « Option IP » de l'entête IPv4. Dans ce cas, une nouvelle option est créée spécifiquement pour mettre en oeuvre l'invention et pour pouvoir y insérer l'information de marquage.

Si le paquet P est conforme à la norme IPv6, la passerelle BX peut insérer l'information de marquage iMRK1 dans le champ « étiquette de flow » ou dans le champ « entête suivante » de l'entête IPv6 du paquet P.

Si le paquet P est conforme à la norme IPv6, tandis que le réseau d'accès NET1 ne supporte que la norme IPv4, la passerelle BX encapsule le paquet P conforme à la norme IPv6 dans un paquet conforme à la norme IPv4. La passerelle peut insérer l'information de marquage dans l'entête IPv6 du paquet transporté P, ou dans l'entête IPv4 du paquet transporteur ou chacune des entêtes IPv4 et IPv6.

Ceci s'applique aussi si le paquet P est conforme à la norme IPv4 et si le réseau d'accès NET1 ne supporte que des paquets IPv6.

Au cours de l'étape E300, en plus de l'insertion de l'information de marquage iMRK1, la passerelle BX peut modifier d'autres champs de l'entête du paquet P conformément à l'état de la technique, tels que le champ « adresse IP source » ou « port source » si le paquet P est un paquet IPv4, ou le champ « Hop Limit » si le paquet P est un paquet IPv6, et le champ « cheksum » pour le paquet P en IPv4. Si le paquet P est un paquet IPv4, la passerelle BX met à jour sa table NAPT conformément à l'état de la technique.

Au cours d'une étape E400, la passerelle BX route le paquet marqué P (et éventuellement transporté dans un autre paquet) vers le réseau d'accès NET1.

Nous supposons que le paquet marqué P est acheminé jusqu'au dispositif D, directement de la passerelle, ou via des dispositifs intermédiaires entre la passerelle et le dispositif D.

Au cours d'une étape E500 du procédé de gestion de trafic, le dispositif D reçoit le paquet P.

Au cours d'une étape E600, le dispositif D cherche dans l'entête du paquet P si un champ de cette entête comporte une information de marquage identique à l'information de marquage iMRK1.

Comme le paquet P comporte dans son entête l'information de marquage, le résultat de la recherche E600 est positif.

Au cours d'une étape E700, le dispositif D traite le paquet P selon le résultat positif de la recherche.

Dans le cas où le paquet P ne comporte pas d'information de marquage, le dispositif D traite au cours d'une étape E800 le paquet P selon un résultat négatif de la recherche.

Nous supposons ici que le traitement E700 du paquet P marqué comporte une mémorisation de paramètres de la session IP durant laquelle le paquet P est reçu, suivie d'une destruction de ce paquet P.

Ainsi, grâce à la mémorisation des paramètres de la session IP, le dispositif D peut détecter tous les autres éventuels paquets générés par le terminal frauduleux TRM sans besoin de chercher (E600) une information de marquage dans leurs entêtes. Le dispositif D traite (E700) tous les paquets de cette session IP d'une même manière, en supposant qu'ils comportent tous l'information de marquage iMRK1.

Dans cet exemple, le dispositif D détruit (E700) le paquet P et tous les paquets de la même session IP que le paquet P. L'impact est que la fraude générée par le terminal TRM est donc bloquée au niveau du dispositif D ; elle n'est pas répercutée aux dispositifs situés en aval du dispositif D, notamment le dispositif destinataire du paquet P.

Dans le mode décrit ci-avant, la passerelle BX met en oeuvre le procédé de différentiation conforme à l'invention pour tous les paquets qu'elle doit transférer, sans aucune considération de session IP, et sans même mémorisation des paramètres de leur(s) session(s) IP.

Dans un autre mode de réalisation, à la réception E200 du paquet P, la passerelle BX mémorise les paramètres de la session IP de ce paquet P. Suite à cette mémorisation des paramètres de la session IP, la passerelle n'insère pas d'information de marquage dans d'autres paquets de la même session IP qu'elle reçoit du terminal TRM, mais elle les transfère au réseau d'accès NET1 conformément à l'état de la technique.

Alternativement, la passerelle BX peut mémoriser les paramètres de la session IP du paquet P et appliquer le procédé de différentiation conforme à l'invention pour un nombre déterminé de paquets de la même session IP. Ainsi, si le paquet P n'aboutit pas au dispositif D mettant en oeuvre le procédé de gestion, au moins un autre paquet marqué de la même session IP pourrait être correctement acheminé jusqu'au dispositif D.

Au cours d'une étape F200, la passerelle BX génère un paquet Q destiné à un dispositif du réseau NET. Dans le mode décrit ici, le paquet Q est un paquet de signalisation.

Au cours d'une étape F300, la passerelle BX insère dans un champ de l'entête IP du paquet Q, une information de marquage iMRK2 indiquant que ce paquet P a été généré par la passerelle BX elle-même. Les exemples de champs dans lesquels l'information de marquage iMRK1 peut être insérée sont valables aussi pour y insérer l'information de marquage iMRK2.

La passerelle BX envoie le paquet Q comportant dans son entête l'information de marquage iMRK2 vers le réseau d'accès NET1 au cours d'une étape F400.

Nous supposons que le dispositif D reçoit ce paquet Q au cours d'une étape F500.

Au cours d'une étape F600, identique à l'étape de recherche E600, le dispositif D cherche dans l'entête du paquet Q s'il comporte l'information de marquage iMRK1.

Le résultat de cette recherche (F600) étant négatif, le dispositif D applique un traitement au cours d'une étape F800 selon ce résultat négatif. Dans le mode décrit ici, ce traitement F800 consiste à un routage du paquet Q vers le dispositif destinataire de ce paquet Q.

Alternativement, si le résultat de la recherche F600 était positif, le dispositif D traite le paquet Q au cours d'une étape F700 selon ce résultat positif.

Dans un mode de réalisation, le dispositif D traite un paquet reçu en provenance de la passerelle BX selon trois possibilités : s'il trouve l'information de marquage iMRK1, ou s'il trouve l'information de marquage iMRK2, ou s'il ne trouve aucune information de marquage.

Dans un mode de réalisation, la passerelle BX n'insère une information de marquage (iMRK1) que pour les paquets générés par des terminaux du réseau local LAN qui lui sont connectés.

Dans un autre mode de réalisation, la passerelle BX n'insère une information de marquage (iMRK2) que pour les paquets qu'elle génère elle-même.

Le procédé de gestion de trafic conforme à l'invention peut aussi être mis en oeuvre par le routeur RTR et/ou par la plateforme P_SRV.

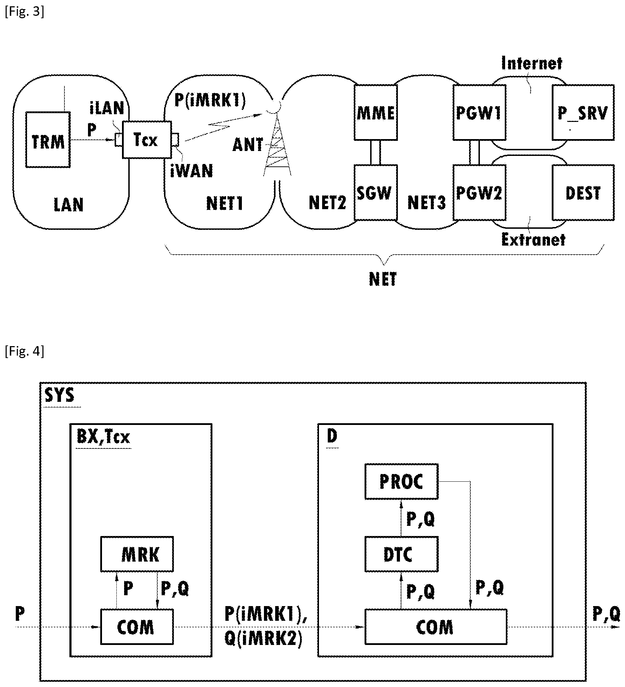

La **figure 3** illustre une architecture d'un réseau local LAN connecté via une passerelle Tcx à un réseau NET d'un opérateur. Cette architecture permet de mettre en oeuvre des procédés de différentiation et de gestion conformes à un deuxième mode de réalisation de l'invention.

Dans ce mode de réalisation, le réseau local LAN est un réseau Wifi. Le réseau NET est un réseau cellulaire, de type 4G par exemple. Le réseau NET comporte un réseau d'accès NET1, un réseau métropolitain NET2, et un réseau coeur NET3. Le réseau local LAN constitue un premier réseau au sens de l'invention. Le réseau d'accès NET1 constitue un deuxième réseau au sens de l'invention.

Un terminal TRM est connecté à la passerelle Tcx via le réseau local LAN. La passerelle Tcx est un terminal connecté à la fois au réseau local LAN (WiFi) et au réseau d'accès NET1 (4G). Cette passerelle Tcx offre un service de Tethering pour faire bénéficier le terminal TRM de sa connexion au réseau d'accès cellulaire NET1.

Dans le mode décrit ici, le réseau d'accès NET1 comporte une antenne ANT de type eNodeB ou eNodeB évoluée. Cette antenne ANT constitue une passerelle entre le réseau d'accès NET1 et le réseau métropolitain NET2
Dans ce mode de réalisation, le réseau coeur NET3 comporte un dispositif de type MME (pour « Mobility Management Entity » en anglais) et un dispositif de type SGW (pour « Serving GateWay » en anglais). Le réseau coeur NET3 est connecté au réseau Internet via un dispositif PGW1 de type PGW (pour « Packet GateWay » en anglais), et à un réseau extranet via un dispositif PGW2 de type PGW également. Une plateforme de service P-SRV est connectée au réseau Internet. Un terminal DEST est connecté au réseau extranet, en particulier ce terminal DEST peut être un destinataire d'un paquet généré par le terminal TRM du réseau local LAN.

Pour éviter des fraudes de connexion de terminaux à la passerelle Tcx sans être autorisé par un utilisateur de la passerelle Tcx, la passerelle Tcx met en oeuvre le procédé de différentiation de trafic, conforme à l'invention. La passerelle Tcx insère donc dans des champs des entêtes IP des paquets qu'elle émet vers le réseau d'accès NET1, une information de marquage pour différencier si ces paquets sont générés par le terminal TRM ou par elle-même (Tcx).

La station de base ANT met en oeuvre le procédé de gestion conforme à l'invention pour gérer le trafic qu'elle reçoit de la passerelle Tcx selon des résultats de recherche d'informations de marquage dans des paquets IP de ce trafic. La station de base ANT constitue un dispositif conforme à l'invention.

Aussi, la station de base ANT peut mettre en oeuvre le procédé de différentiation conforme à l'invention, pour différencier si un paquet qu'elle émet vers un dispositif du réseau NET (par exemple le dispositif MME ou un routeur) a été généré par elle-même (ANT) ou a été généré par un terminal Tcx connecté à elle via le réseau d'accès NET1 Dans ce cas, le réseau d'accès NET1 constitue un premier réseau au sens de l'invention, et le réseau d'agrégation NET2 constitue un deuxième réseau au sens de l'invention.

Chacun des dispositifs MME, SGW, PGW1, PGW2, P_SRV et DEST peut constituer un dispositif conforme à l'invention et mettre en oeuvre le procédé de gestion de trafic conforme à l'invention.

En particulier, l'organigramme de la figure 2 peut être appliqué dans les réseaux de la figure 3.

La **figure 4** représente des architecture fonctionnelles, selon un mode de réalisation de l'invention, d'un système SYS de gestion de trafic, d'une passerelle BX (ou Tcx) et d'un dispositif de gestion de trafic D (ou RTR, ANT, MME, SGW, PGW, PGW1, PGW2, P_SRV, DEST), le système SYS, la passerelle BX et le dispositif D étant tous conformes à l'invention.

Le système SYS comporte la passerelle BX et le dispositif D.

La passerelle BX est une passerelle entre un réseau local LAN et un réseau d'accès NET1 tels que décrits en référence aux figures précédentes 1 à 3. La passerelle BX comporte :
- un module MRK de différentiation de trafic configuré pour insérer une information de marquage (iMRK1, iMRK2) dans un champ de l'entête d'un paquet (P, Q) émis par cette passerelle et destiné à être routé vers le réseau d'accès NET1 pour différencier si :
   - le paquet (P) a été généré par la passerelle BX ; ou si
   - le paquet (Q) a été généré par un terminal TRM du réseau local LAN et qui lui est connecté; et
- des moyens de communication COM configurés pour envoyer le paquet (P, Q) vers le réseau d'accès NET1.

La passerelle BX peut être comprise dans :
- un terminal pouvant fournir un service de partage de connexion de type Tethering, tel que le terminal Tcx décrit en référence à la figure 3 ;
- un équipement de terminaison de réseau, tel que l'équipement BX décrit en référence aux figures 1 et 2 ; ou
- une antenne d'un réseau cellulaire, telle que la station de base ANT décrite en référence à la figure 3 .

Le dispositif D est un dispositif d'un réseau NET comportant un réseau d'accès NET1, de tels réseaux sont décrits en référence aux figures précédentes 1 à3. Le dispositif D est connecté à la passerelle BX via le réseau d'accès NET1. Il permet de gérer un trafic reçu en provenance de cette passerelle et il comporte :
-- des moyens de communication COM configurés pour recevoir un paquet (P, Q) en provenance de la passerelle BX;
-- des moyens de recherche DTC configurés pour rechercher au moins une information de marquage (iMRK1, iMRK2) dans un champ de l'entête du paquet (P, Q), cette information de marquage permettant de différencier si :
   - le paquet (Q) a été généré par la passerelle, ou si
   - le paquet (P) a été généré par un terminal TRM du réseau local LAN connecté à la passerelle BX; et
-- un module de traitement PROC configuré pour traiter le paquet (P, Q) en fonction du résultat de la recherche.

Le dispositif D conforme à l'invention peut être compris dans :
-- un dispositif destinataire du paquet, tel que le dispositif DEST décrit en référence à la figure 3 ;
-- un équipement de terminaison de réseau ;
-- un point d'accès d'un réseau d'accès cellulaire, comme la station de base ANT décrite en référence à la figure 3;
-- un routeur RTR ;
-- un commutateur ;
-- un équipement de gestion de la charge de trafic ;
-- un serveur de type Firewall ;
-- un dispositif de type A-SBC, P-CSCF, MME, PGW, ou SGW ; ou
-- une plateforme de fourniture d'un service, telle que la plateforme P_SRV décrite en référence aux figures 1 et 3.

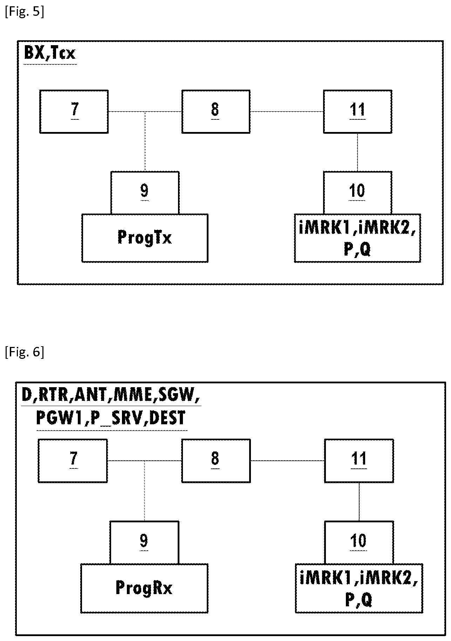

Dans les modes de réalisation décrits ici, la passerelle BX (ou Tcx) a l'architecture matérielle d'un ordinateur, telle qu'illustrée à la **figure 5****.**

L'architecture de la passerelle BX (ou Tcx) comprend notamment un processeur 7, une mémoire vive 8, une mémoire morte 9, une mémoire flash non volatile 10 dans un mode particulier de réalisation de l'invention, ainsi que des moyens de communication 11. De tels moyens sont connus en soi et ne sont pas décrits plus en détail ici.

La mémoire morte 9 de la passerelle BX (ou Tcx) selon l'invention constitue un support d'enregistrement conforme à l'invention, lisible par le processeur 7 et sur lequel est enregistré ici un programme d'ordinateur ProgTx conforme à l'invention.

La mémoire 10 de la passerelle BX (ou Tcx) permet d'enregistrer des variables utilisées pour l'exécution des étapes du procédé de différentiation selon l'invention, telles que les paquets P et Q et les informations de marquage iMRK1 et iMRK2.

Le programme d'ordinateur ProgTx définit des modules fonctionnels et logiciels ici, configurés pour différencier un trafic émis par la passerelle BX (ou Tcx). Ces modules fonctionnels s'appuient sur et/ou commandent les éléments matériels 7-11 de la passerelle BX (ou Tcx) cités précédemment.

Dans le mode de réalisation décrit ici, le dispositif de gestion de trafic D (ou RTR, ANT, MME, SGW, PGW, PGW1, PGW2, P_SRV, DEST) a l'architecture matérielle d'un ordinateur, telle qu'illustrée à la **figure 6****.**

L'architecture du dispositif D comprend notamment un processeur 7, une mémoire vive 8, une mémoire morte 9, une mémoire flash non volatile 10 dans un mode particulier de réalisation de l'invention, ainsi que des moyens de communication 11. De tels moyens sont connus en soi et ne sont pas décrits plus en détail ici.

La mémoire morte 9 du dispositif D selon l'invention constitue un support d'enregistrement conforme à l'invention, lisible par le processeur 7 et sur lequel est enregistré ici un programme d'ordinateur ProgRx conforme à l'invention.

La mémoire 10 du dispositif D permet d'enregistrer des variables utilisées pour l'exécution des étapes du procédé de gestion selon l'invention, telles que les paquets P et Q et les informations de marquage iMRK1 et iMRK2.

Le programme d'ordinateur ProgRx définit des modules fonctionnels et logiciels ici, configurés pour gérer un trafic émis par la passerelle BX (Tcx). Ces modules fonctionnels s'appuient sur et/ou commandent les éléments matériels 7-11 du dispositif D cités précédemment.

## Revendications

1. Procédé de différentiation de trafic, mis en oeuvre par une passerelle (BX, Tcx, ANT) entre un premier réseau (LAN, NET1) et un deuxième réseau (NET1, NET2), ledit procédé comprenant des étapes de:
- insertion (E300, F300) d'une information de marquage (iMRK1, iMRK2) dans un champ de l'entête d'un paquet (P, Q) émis par ladite passerelle et destiné à être routé vers ledit deuxième réseau (NET1, NET2), ladite information de marquage (iMRK1, iMRK2) permettant à un dispositif (D) d'un réseau (NET) comportant le deuxième réseau (NET1, NET2) de différencier si :
- ledit paquet (Q) a été généré (F200) par ladite passerelle, ou si
- ledit paquet (P) a été généré (E100) par un terminal (TRM, Tcx) dudit premier réseau (LAN,NET1) connecté à ladite passerelle ; et
- envoi (E400, F400) dudit paquet (P, Q) vers ledit deuxième réseau (NET1, NET2).

2. Procédé de gestion d'un trafic reçu par un dispositif (D) d'un réseau (NET) comportant un dit deuxième réseau (NET1, NET2), le trafic étant reçu en provenance d'une passerelle (BX, Tcx, ANT) entre un premier réseau (LAN, NET1) et ledit deuxième réseau (NET1, NET2), ledit dispositif étant connecté à ladite passerelle via ledit deuxième réseau (NET1, NET2), ledit procédé comprenant des étapes de :
- réception (E500, F500) d'un paquet (P, Q) en provenance de ladite passerelle ;
- recherche (E600, F600) d'une information de marquage (iMRK1, iMRK2) dans un champ de l'entête dudit paquet (P, Q), ladite information de marquage permettant de différencier si :
- ledit paquet (Q) a été généré (F200) par ladite passerelle, ou si
- ledit paquet (P) a été généré (E100) par un terminal (TRM) dudit réseau local (LAN) connecté à ladite passerelle ; et
- traitement (E700, E800, F700, F800) dudit paquet (P, Q) en fonction du résultat de ladite recherche.

3. Procédé selon la revendication 2 dans lequel ledit traitement dudit paquet comporte au moins une action parmi:
-- une incrémentation d'un compteur de paquets comportant une information de marquage ;
-- une suppression ou une modification de ladite information de marquage avant transfert dudit paquet vers un autre dispositif ;
-- une sélection d'une qualité de service à appliquer audit paquet ;
-- une application audit paquet d'une méthode de routage ;
-- une destruction dudit paquet ;
--un envoi d'un paquet ICMP vers l'expéditeur du paquet traité ;
-- une création d'un tunnel IP pour router ledit paquet via ledit tunnel ;
-- une décapsulation d'un tunnel IP via lequel ledit paquet est routé ; et
-- une mémorisation de paramètres de session durant laquelle ledit paquet (P, Q) est reçu (E500, F500), pour appliquer un traitement à d'autres paquets de la même session.

4. Procédé selon l'une quelconque des revendications 1 à 3 dans lequel :
- le premier réseau est un réseau local (LAN) et le deuxième réseau est un réseau d'accès (NET1) ; ou
- le premier réseau est un réseau d'accès (NET1) et le deuxième réseau est un réseau d'agrégation (NET2) ou un réseau coeur.

5. Procédé selon l'une quelconque des revendications 1 à 4 dans lequel ledit paquet est de type IPv4, ledit champ étant le champ « Drapeaux » ou le champ « options IP » d'une entête IPv4.

6. Procédé selon l'une quelconque des revendications 1 à 5 dans lequel ledit paquet est de type IPv6, ledit champ étant le champ de type « étiquette de flow » ou « entête d'extension» d'une entête IPv6.

7. Programme d'ordinateur (ProgTx, ProgRx) comportant des instructions pour l'exécution des étapes du procédé de différentiation selon l'une quelconque des revendications 1 ou 4 à 6, ou des étapes du procédé de gestion selon l'une quelconque des revendications 2 à 6 lorsque ledit programme est exécuté par un ordinateur.

8. Support d'enregistrement (7) lisible par un ordinateur sur lequel est enregistré un programme d'ordinateur selon la revendication 7.

9. Passerelle (BX, Tcx, ANT) entre un premier réseau (LAN, NET1) et un deuxième réseau (NET1, NET2), comprenant :
- un module (MRK) de différentiation de trafic configuré pour insérer une information de marquage (iMRK1, iMRK2) dans un champ de l'entête d'un paquet (P, Q) émis par ladite passerelle et destiné à être routé vers ledit deuxième réseau (NET1, NET2), ladite information de marquage (iMRK1, iMRK2) permettant à un dispositif (D) d'un réseau (NET) comportant le deuxième réseau (NET1, NET2) de différencier si :
- ledit paquet a été généré par ladite passerelle; ou si
- ledit paquet a été généré par un terminal (TRM, Tcx) dudit premier réseau (LAN, NET1) connecté à ladite passerelle ; et
- des moyens de communication (COM) configurés pour envoyer ledit paquet (P, Q) vers ledit deuxième réseau d'accès (NET1, NET2).

10. Passerelle selon la revendication 9 comprise dans :
- un terminal (Tcx) pouvant fournir un service de partage de connexion de type Tethering;
- un équipement de terminaison de réseau (BX) ; ou
- une station de base d'un réseau cellulaire (ANT).

11. Dispositif (D) d'un réseau (NET) comportant un dit deuxième réseau (NET1, NET2), ledit dispositif (D) étant connecté à une passerelle entre un premier réseau (LAN, NET1) et ledit deuxième réseau (NET1, NET2), et permettant de gérer un trafic reçu en provenance de ladite passerelle, ledit dispositif comprenant :
-- des moyens de communication (COM) configurés pour recevoir un paquet (P, Q) en provenance de ladite passerelle ;
-- des moyens de recherche (DTC) configurés pour rechercher au moins une information de marquage (iMRK1, iMRK2) dans un champ de l'entête dudit paquet (P, Q), ladite information de marquage permettant de différencier si :
- ledit paquet (Q) a été généré par ladite passerelle, ou si
- ledit paquet (P) a été généré par un terminal (TRM, Tcx) dudit premier réseau local (LAN, NET1) connecté à ladite passerelle ; et
-- un module de traitement (PROC) configuré pour traiter ledit paquet (P, Q) en fonction du résultat de la recherche.

12. Dispositif selon la revendication 11 compris dans :
-- un dispositif (DEST) destinataire dudit paquet ;
-- un équipement de terminaison de réseau ;
-- un point d'accès (ANT) d'un réseau d'accès cellulaire ;
-- un routeur (RTR) ;
-- un commutateur ;
-- un équipement de gestion de la charge de trafic ;
-- un serveur de type Firewall ;
-- un dispositif de type A-SBC, P-CSCF, MME, PGW, ou SGW ; ou
-- une plateforme de fourniture d'un service (P_SRV).

13. Système (SYS) de gestion d'un trafic émis par une passerelle, selon l'une des revendications 9 à 10, vers ledit deuxième réseau, ledit système comportant ladite passerelle et au moins un dispositif de gestion selon l'une des revendications 11 à 12.

## Patentansprüche

1. Verfahren zur Unterscheidung von Verkehr, das von einem Gateway (BX, Tcx, ANT) zwischen einem ersten Netzwerk (LAN, NET1) und einem zweiten Netzwerk (NET1, NET2) umgesetzt wird, wobei das Verfahren die folgenden Schritte umfasst:
- Einfügen (E300, F300) einer Kennzeichnungsinformation (iMRK1, iMRK2) in ein Feld des Headers eines Pakets (P, Q), das von dem Gateway gesendet wird und dazu bestimmt ist, zu dem zweiten Netzwerk (NET1, NET2) geschickt zu werden, wobei die Kennzeichnungsinformation (iMRK1, iMRK2) es einer Vorrichtung (D) eines Netzwerks (NET), welches das zweite Netzwerk (NET1, NET2) beinhaltet, ermöglicht zu unterscheiden, ob:
- das Paket (Q) von dem Gateway erzeugt worden ist (F200), oder ob
- das Paket (P) von einem Endgerät (TRM, Tcx) des ersten Netzwerks (LAN, NET1) erzeugt worden ist (E100), das mit dem Gateway verbunden ist; und
- Senden (E400, F400) des Pakets (P, Q) zu dem zweiten Netzwerk (NET1, NET2).

2. Verfahren zur Verwaltung eines Verkehrs, der von einer Vorrichtung (D) eines Netzwerks (NET), das ein solches zweites Netzwerk (NET1, NET2) beinhaltet, empfangen wird, wobei der Verkehr von einem Gateway (BX, Tcx, ANT) zwischen einem ersten Netzwerk (LAN, NET1) und dem zweiten Netzwerk (NET1, NET2) empfangen wird, wobei die Vorrichtung mit dem Gateway über das zweite Netzwerk (NET1, NET2) verbunden ist, wobei das Verfahren die folgenden Schritte umfasst:
- Empfangen (E500, F500) eines Pakets (P, Q) von dem Gateway;
- Suchen (E600, F600) einer Kennzeichnungsinformation (iMRK1, iMRK2) in einem Feld des Headers des Pakets (P, Q), wobei die Kennzeichnungsinformation es ermöglicht zu unterscheiden, ob:
- das Paket (Q) von dem Gateway erzeugt worden ist (F200) oder ob
- das Paket (P) von einem Endgerät (TRM) des lokalen Netzwerks (LAN) erzeugt worden ist (E100), das mit dem Gateway verbunden ist; und
- Verarbeiten (E700, E800, F700, F800) des Pakets (P, Q) in Abhängigkeit vom Ergebnis der Suche.

3. Verfahren nach Anspruch 2, bei dem die Verarbeitung des Pakets mindestens einen Vorgang beinhaltet unter:
-- einer Inkrementierung eines Paketzählers, der eine Kennzeichnungsinformation beinhaltet;
-- einer Löschung oder einer Änderung der Kennzeichnungsinformation vor der Weiterleitung des Pakets zu einer anderen Vorrichtung;
-- einer Auswahl einer Dienstgüte, die auf das Paket anzuwenden ist;
-- einer Anwendung einer Routingmethode auf das Paket;
-- einer Vernichtung des Pakets;
-- einem Senden eines ICMP-Pakets an den Absender des verarbeiteten Pakets;
-- einer Erstellung eines IP-Tunnels, um das Paket über den Tunnel zu schicken;
-- einer Entkapselung eines IP-Tunnels, über den das Paket geschickt wird; und
-- einer Speicherung von Parametern einer Sitzung, während der das Paket (P, Q) empfangen wird (E500, F500), um eine Verarbeitung auf andere Pakete derselben Sitzung anzuwenden.

4. Verfahren nach einem der Ansprüche 1 bis 3, bei dem:
- das erste Netzwerk ein lokales Netzwerk (LAN) ist und das zweite Netzwerk ein Zugangsnetzwerk (NET1) ist; oder
- das erste Netzwerk ein Zugangsnetzwerk (NET1) ist und das zweite Netzwerk ein Aggregationsnetzwerk (NET2) oder ein Kernnetzwerk ist.

5. Verfahren nach einem der Ansprüche 1 bis 4, bei dem das Paket vom Typ IPv4 ist, wobei das Feld das Feld "Flags" oder das Feld "IP Options" eines IPv4-Headers ist.

6. Verfahren nach einem der Ansprüche 1 bis 5, bei dem das Paket vom Typ IPv6 ist, wobei das Feld das Feld "Flow Label" oder "Extension Header" eines IPv6-Headers ist.

7. Computerprogramm (ProgTx, ProgRx), das Anweisungen beinhaltet, die bei der Ausführung des Programms durch einen Computer die Schritte des Verfahrens zur Unterscheidung nach einem der Ansprüche 1 oder 4 bis 6 oder die Schritte des Verfahrens zur Verwaltung nach einem der Ansprüche 2 bis 6 ausführen.

8. Computerlesbares Speichermedium (7), auf dem ein Computerprogramm nach Anspruch 7 gespeichert ist.

9. Gateway (BX, Tcx, ANT) zwischen einem ersten Netzwerk (LAN, NET1) und einem zweiten Netzwerk (NET1, NET2), umfassend:
- ein Modul (MRK) zur Unterscheidung von Verkehr, das dazu ausgestaltet ist, eine Kennzeichnungsinformation (iMRK1, iMRK2) in ein Feld des Headers eines Pakets (P, Q) einzufügen, das von dem Gateway gesendet wird und dazu bestimmt ist, zu dem zweiten Netzwerk (NET1, NET2) geschickt zu werden, wobei die Kennzeichnungsinformation (iMRK1, iMRK2) es einer Vorrichtung (D) eines Netzwerks (NET), welches das zweite Netzwerk (NET1, NET2) beinhaltet, ermöglicht zu unterscheiden, ob:
- das Paket von dem Gateway erzeugt worden ist; oder ob
- das Paket von einem Endgerät (TRM, Tcx) des ersten Netzwerks (LAN, NET1) erzeugt worden ist, das mit dem Gateway verbunden ist; und
- Kommunikationsmittel (COM), die dazu ausgestaltet sind, das Paket (P, Q) zu dem zweiten Zugangsnetzwerk (NET1, NET2) zu senden.

10. Gateway nach Anspruch 9, das enthalten ist in:
- einem Endgerät (Tcx), das einen Verbindungsteilungsdienst vom Typ Tethering bereitstellen kann;
- einer Netzabschlusseinrichtung (BX) oder
- einer Basisstation eines zellularen Netzwerks (ANT).

11. Vorrichtung (D) eines Netzwerks (NET), das ein zweites Netzwerk (NET1, NET2) beinhaltet, wobei die Vorrichtung (D) mit einem Gateway zwischen einem ersten Netzwerk (LAN, NET1) und dem zweiten Netzwerk (NET1, NET2) verbunden ist und es ermöglicht, einen von dem Gateway empfangenen Verkehr zu verwalten, wobei die Vorrichtung umfasst:
-- Kommunikationsmittel (COM), die dazu ausgestaltet sind, ein Paket (P, Q) von dem Gateway zu empfangen;
-- Suchmittel (DTC), die dazu ausgestaltet sind, mindestens eine Kennzeichnungsinformation (iMRK1, iMRK2) in einem Feld des Headers des Pakets (P, Q) zu suchen, wobei die Kennzeichnungsinformation es ermöglicht zu unterscheiden, ob:
- das Paket (Q) von dem Gateway erzeugt worden ist, oder ob
- das Paket (P) von einem Endgerät (TRM, Tcx) des ersten lokalen Netzwerks (LAN, NET1) erzeugt worden ist, das mit dem Gateway verbunden ist, und
-- ein Verarbeitungsmodul (PROC), das dazu ausgestaltet ist, das Paket (P, Q) in Abhängigkeit vom Ergebnis der Suche zu verarbeiten.

12. Vorrichtung nach Anspruch 11, die enthalten ist in:
-- einer Empfängervorrichtung (DEST) des Pakets;
-- einer Netzabschlusseinrichtung;
-- einem Zugangspunkt (ANT) eines zellularen Zugangsnetzwerks;
-- einem Router (RTR);
-- einem Switch;
-- einer Einrichtung zur Verwaltung der Verkehrslast;
-- einem Server vom Typ Firewall;
-- einer Vorrichtung vom Typ A-SBC, P-CSCF, MME, PGW oder SGW; oder
-- einer Plattform zur Bereitstellung eines Dienstes (P_SRV).

13. System (SYS) zur Verwaltung eines Verkehrs, der von einem Gateway nach einem der Ansprüche 9 bis 10 zu einem zweiten Netzwerk gesendet wird, wobei das System das Gateway und mindestens eine Vorrichtung zur Verwaltung nach einem der Ansprüche 11 bis 12 beinhaltet.

## Claims

1. Method for distinguishing traffic, implemented by a gateway (BX, Tcx, ANT) between a first network (LAN, NET1) and a second network (NET1, NET2), said method comprising the following steps:
- inserting (E300, F300) marking information (iMRK1, iMRK2) into a field of the header of a packet (P, Q) transmitted by said gateway and intended to be routed to said second network (NET1, NET2), said marking information (iMRK1, iMRK2) allowing a device (D) of a network (NET) comprising the second network (NET1, NET2) to distinguish whether:
- said packet (Q) was generated (F200) by said gateway, or whether
- said packet (P) was generated (E100) by a terminal (TRM, Tcx) of said first network (LAN, NET1) connected to said gateway; and
- sending (E400, F400) said packet (P, Q) to said second network (NET1, NET2).

2. Method for managing traffic received by a device (D) of a network (NET) comprising what is referred to as a second network (NET1, NET2), the traffic being received from a gateway (BX, Tcx, ANT) between a first network (LAN, NET1) and said second network (NET1, NET2), said device being connected to said gateway via said second network (NET1, NET2), said method comprising the following steps:
- receiving (E500, F500) a packet (P, Q) from said gateway;
- searching (E600, F600) for marking information (iMRK1, iMRK2) in a field of the header of said packet (P, Q), said marking information making it possible to distinguish whether:
- said packet (Q) was generated (F200) by said gateway, or whether
- said packet (P) was generated (E100) by a terminal (TRM) of said local area network (LAN) connected to said gateway; and
- processing (E700, E800, F700, F800) said packet (P, Q) on the basis of the result of said search.

3. Method according to Claim 2, wherein said processing of said packet comprises at least one action from among:
-- incrementing a packet counter containing marking information;
-- removing or modifying said marking information before transferring said packet to another device;
-- selecting a quality of service to be applied to said packet;
-- applying a routing method to said packet;
-- destroying said packet;
-- sending an ICMP packet to the sender of the processed packet;
-- creating an IP tunnel in order to route said packet via said tunnel;
-- decapsulating an IP tunnel via which said packet is routed; and
-- storing parameters regarding the session during which said packet (P, Q) is received (E500, F500), in order to apply processing to other packets from the same session.

4. Method according to any one of Claims 1 to 3, wherein:
- the first network is a local area network (LAN) and the second network is an access network (NET1); or
- the first network is an access network (NET1) and the second network is an aggregation network (NET2) or a core network.

5. Method according to any one of Claims 1 to 4, wherein said packet is an IPv4 packet, said field being the "Flags" field or the "IP Options" field of an IPv4 header.

6. Method according to any one of Claims 1 to 5, wherein said packet is an IPv6 packet, said field being the "Flow Label" or "Extension Header" field of an IPv6 header.

7. Computer program (ProgTx, ProgRx) comprising instructions for executing the steps of the distinguishing method according to any one of Claims 1 or 4 to 6 or the steps of the management method according to any one of Claims 2 to 6 when said program is executed by a computer.

8. Recording medium (7) able to be read by a computer and on which there is recorded a computer program according to Claim 7.

9. Gateway (BX, Tcx, ANT) between a first network (LAN, NET1) and a second network (NET1, NET2), comprising:
- a module (MRK) for distinguishing traffic, configured to insert marking information (iMRK1, iMRK2) into a field of the header of a packet (P, Q) transmitted by said gateway and intended to be routed to said second network (NET1, NET2), said marking information (iMRK1, iMRK2) allowing a device (D) of a network (NET) comprising the second network (NET1, NET2) to distinguish whether:
- said packet was generated by said gateway; or whether
- said packet was generated by a terminal (TRM, Tcx) of said first network (LAN, NET1) connected to said gateway; and
- communication means (COM) configured to send said packet (P, Q) to said second access network (NET1, NET2) .

10. Gateway according to Claim 9, contained within:
- a terminal (Tcx) able to provide a tethering connection-sharing service;
- a network termination equipment (BX); or
- a base station of a cellular network (ANT).

11. Device (D) of a network (NET) comprising what is referred to as a second network (NET1, NET2), said device (D) being connected to a gateway between a first network (LAN, NET1) and said second network (NET1, NET2), and making it possible to manage traffic received from said gateway, said device comprising:
-- communication means (COM) configured to receive a packet (P, Q) from said gateway;
-- searching means (DTC) configured to search for at least one item of marking information (iMRK1, iMRK2) in a field of the header of said packet (P, Q), said marking information making it possible to distinguish whether:
- said packet (Q) was generated by said gateway, or whether
- said packet (P) was generated by a terminal (TRM, Tcx) of said first local area network (LAN, NET1) connected to said gateway; and
-- a processing module (PROC) configured to process said packet (P, Q) on the basis of the result of the search.

12. Device according to Claim 11, contained within:
-- a device (DEST) intended to receive said packet;
-- a network termination equipment;
-- an access point (ANT) of a cellular access network;
-- a router (RTR);
-- a switch;
-- a traffic load management equipment;
-- a firewall server;
-- an A-SBC, P-CSCF, MME, PGW or SGW device; or
-- a service provision platform (P_SRV).

13. System (SYS) for managing traffic transmitted by a gateway, according to either of Claims 9 and 10, to said second network, said system comprising said gateway and at least one management device according to either of Claims 11 and 12.
